# EUROPEAN PATENT SPECIFICATION

(11) **EP 3 836 270 B1**
(45) Date of publication and mention of the grant of the patent: **02.08.2023**
(21) Application number: 20213230.4
(22) Date of filing: 10.12.2020
(51) Int. Cl.: H01M 10/04, H01M 50/213, H01M 50/222, H01M 50/24, H01M 50/291, H01M 50/293, H01M 50/571, H01M 50/593

(54) **BATTERY PACK**
BATTERIESATZ
BLOC-BATTERIE

(30) Priority: 11.12.2019 KR 20190164643
(43) Date of publication of application: 16.06.2021
(73) Proprietor: Samsung SDI Co., Ltd., Yongin-si, Gyeonggi-do 17084 (KR)
(72) Inventor: LEE, Haneul, 17084 Gyeonggi-do (KR)
(74) Representative: Taor, Simon Edward William

(56) References cited:
- EP-A1- 2 866 295
- EP-A1- 3 790 101
- WO-A2-2010/056750
- US-A1- 2010 136 396

## Description

### BACKGROUND

### 1. Field

One or more embodiments relate to battery packs.

### 2 Description of the Related Art

Generally, secondary batteries are chargeable and dischargeable batteries, unlike primary batteries that are not chargeable. Secondary batteries are used as energy sources for mobile devices, electric vehicles, hybrid vehicles, electric bicycles, uninterruptible power supplies, or the like, and may be used in the form of a single cell, depending on the type of an external device to which the secondary battery is applied, or in the form of a module by connecting a plurality of cells into a single unit.

Small mobile devices, such as mobile phones, can operate for a certain period of time with the output and capacity of a single cell. However, in the case of long-term driving or high-power driving of electric vehicles or hybrid vehicles having a high power consumption, due to the battery output and capacity, a module type including a plurality of cells is preferred. The output voltage or output current may be increased according to the number of built-in cells.

EP2866295A1 discloses a battery pack with a temperature measuring device.

EP3790101A1 discloses an energy storage module including battery cells including a vent and insulation spacers arranged between adjacent pairs of battery cells.

### SUMMARY

According to an aspect of one or more embodiments, a battery pack is provided in which battery cells may be insulated and protected in an emergency situation, such as fire or explosion of the battery cells, the propagation of flames erupted from the battery cells may be suppressed, and an electrical short circuit due to humidity or moisture generated by dew condensation, for example, may be prevented or substantially prevented.

Additional aspects will be set forth, in part, in the description which follows and, in part, will be apparent from the description, or may be learned by practice of the presented embodiments of the disclosure.

According to an aspect, there is provided a battery pack as set out in claim 1. Additional features are set out in claims 2 to 15.

### BRIEF DESCRIPTION OF THE DRAWINGS

The above and other aspects, features, and advantages of embodiments of the disclosure will be more apparent from the following description of some example embodiments taken in conjunction with the accompanying drawings, in which:
FIG. 1 is an exploded perspective view of a battery pack according to an embodiment;
FIGS. 2 and 3 are a perspective view and a plan view, respectively, of a ceramic sheet extending and surrounding battery cells in a row illustrated in FIG. 1;
FIG. 4 is an exploded perspective view of an assembled state of the battery cells in a row and the ceramic sheet illustrated in FIGS. 2 and 3;
FIG. 5 is a plan view of an arrangement of ceramic sheets illustrated in FIG. 1;
FIG. 6 is a perspective view of a battery cell illustrated in FIG. 1;
FIGS. 7 and 8 are plan views of a structure of an upper holder and a lower holder illustrated in FIG. 1;
FIG. 9 is a plan view of a ceramic sheet extending and surrounding battery cells in a battery pack according to another aspect; and
FIG. 10 is a plan view of a structure of the ceramic sheet illustrated in FIG. 9.

### DETAILED DESCRIPTION

Reference will now be made in further detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present disclosure. As used herein, the term "and/or" includes any and all combinations of one or more of the associated listed items. Expressions such as "at least one of," when preceding a list of elements, modify the entire list of elements and do not modify the individual elements of the list.

As used herein, the singular forms "a," "an," and "the" are intended to include the plural forms as well, unless the context clearly indicates otherwise.

It is to be understood that the terms "comprise," "include," and "have" used herein specify the presence of stated features or components, but do not preclude the presence or addition of one or more other features or components.

Sizes of components in the drawings may be exaggerated for convenience of description. In other words, since the sizes and thicknesses of components in the drawings may be arbitrarily illustrated for convenience of description, the following embodiments are not limited thereto.

It is to be understood that when a layer, region, or component is referred to as being "connected to" another layer, region, or component, it may be directly connected to the other layer, region, or component or may be indirectly connected to the other layer, region, or component with one or more intervening layers, regions, or components interposed therebetween. For example, it is to be understood that when a layer, region, or component is referred to as being "electrically connected to" another layer, region, or component, it may be directly electrically connected to the other layer, region, or component or may be indirectly electrically connected to the other layer, region, or component with one or more intervening layers, regions, or components interposed therebetween.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the exemplary term "below" can encompass both an orientation of above and below. The device may be otherwise oriented (rotated 90 degrees or at other orientations) and the spatially relative descriptors used herein interpreted accordingly.

Unless otherwise defined, all terms (including technical and scientific terms) used herein have the same meaning as commonly understood by one of ordinary skill in the art to which example embodiments of the inventive concept belong. It is to be further understood that terms, such as those defined in commonly-used dictionaries, should be interpreted as having a meaning that is consistent with their meaning in the context of the relevant art and will not be interpreted in an idealized or overly formal sense unless expressly so defined herein.

A battery pack according to some example embodiments is described below with reference to the accompanying drawings. Example embodiments that do not fall within the scope of the claims are not covered by the claimed invention.

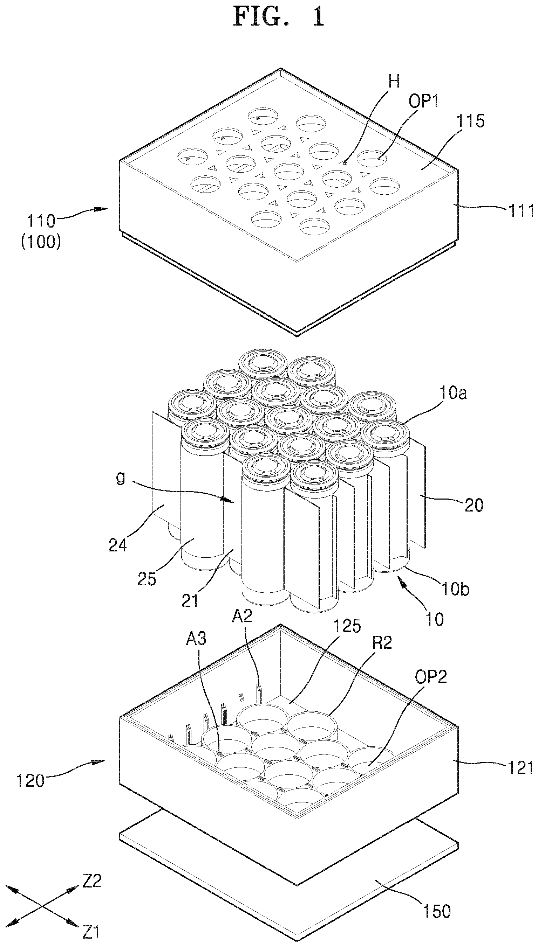

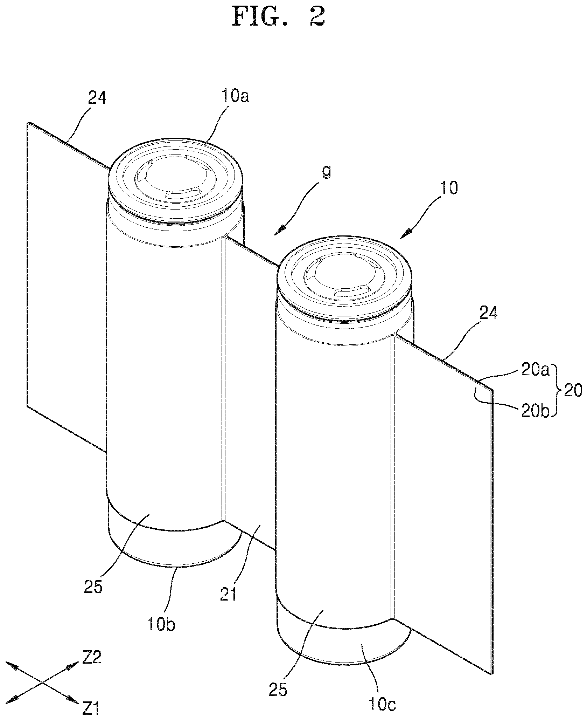

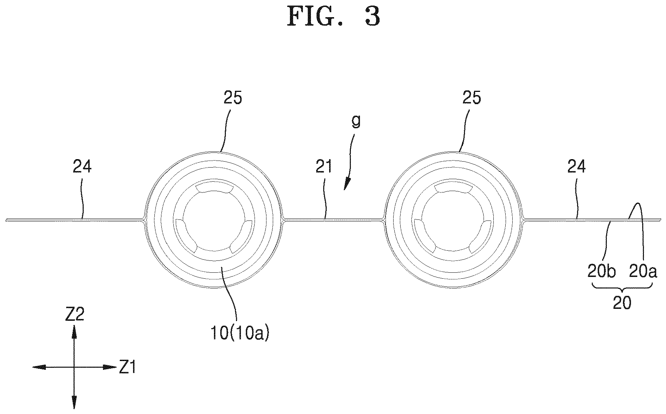

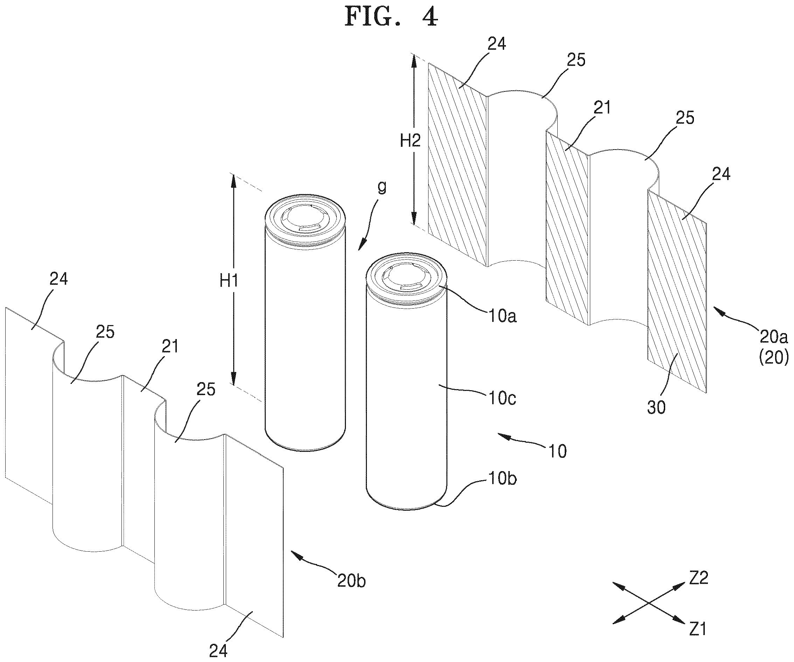

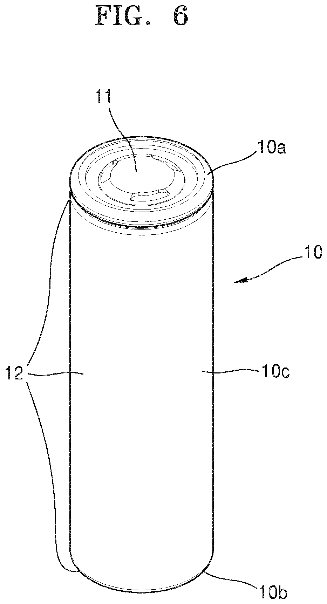

FIG. 1 is an exploded perspective view of a battery pack; FIGS. 2 and 3 are a perspective view and a plan view, respectively, of a ceramic sheet extending and surrounding battery cells in a row illustrated in FIG. 1; FIG. 4 is an exploded perspective view of an assembled state of the battery cells in a row and the ceramic sheet illustrated in FIGS. 2 and 3; FIG. 5 is a plan view of an arrangement of ceramic sheets illustrated in FIG. 1; FIG. 6 is a perspective view of a battery cell illustrated in FIG. 1; and FIGS. 7 and 8 are plan views of a structure of an upper holder and a lower holder illustrated in FIG. 1.

Referring to FIGS. 1 to 3, a battery pack includes a plurality of battery cells 10 arranged in a row spaced apart from each other by a separation gap g, the battery cells 10 being provided in a plurality of rows, and a ceramic sheet 20 extending and surrounding the battery cells 10 of at least any one row, the ceramic sheet 20 including a non-adhesive portion 25 surrounding each of the battery cells 10 and an adhesive portion 21 extending across the separation gap g between the neighboring non-adhesive portions 25.

Referring to FIG. 6, each of the battery cells 10 may include an upper end portion 10a and a lower end portion 10b in a height direction, and, are provided as a cylindrical battery cell including an outer circumferential surface 10c having a cylindrical shape between the upper end portion 10a and the lower end portion 10b. In an embodiment, first and second electrodes 11 and 12 having opposite polarities may be respectively formed at the upper end portion 10a and the lower end portion 10b of each of the battery cells 10. For example, the first and second electrodes 11 and 12 of each of the battery cells 10 may respectively refer to the positive pole and the negative pole of each of the battery cells 10. In an embodiment, the second electrode 12 may extend from the lower end portion 10b of each of the battery cells 10 to an edge of the upper end portion 10a of each of the battery cells 10 along the outer circumferential surface 10c. In other words, in an embodiment, the first and second electrodes 11 and 12 may be formed at positions separated from each other at the upper end portion 10a of each of the battery cells 10. For example, the first electrode 11 may be formed at a central position of the upper end portion 10a of each of the battery cells 10, and the second electrode 12 may be formed at an edge position of the upper end portion 10a of each of the battery cells 10. In an embodiment, electrical connection between the battery cells 10 different from each other may be made through the upper end portion 10a of each of the battery cells 10 where the first and second electrodes 11 and 12 are formed together, and cooling of each of the battery cells 10 may be performed through the lower end portion 10b of each of the battery cells 10.

Referring to FIGS. 2 to 4, the outer circumferential surface 10c of each of the battery cells 10 may be surrounded by the ceramic sheet 20. In an embodiment, the ceramic sheet 20 may extend in a row direction Z1 by surrounding (e.g., entirely surrounding) the outer circumferential surfaces 10c of a row of the battery cells 10. The row direction Z1 may refer to a direction in which a row of the battery cells 10 is arranged, and correspond to a lengthwise direction of the ceramic sheet 20.

In an embodiment, the ceramic sheet 20 surrounding (e.g., entirely surrounding) the outer circumferential surfaces 10c of the battery cells 10 may mean that the ceramic sheet 20 seamlessly surrounds the outer circumferential surfaces 10c of the battery cells 10 along the outer circumferential surface 10c of each of the battery cells 10. For example, the ceramic sheet 20 may be seamlessly disposed around each of the battery cells 10 in a circumferential direction of each of the battery cells 10. In an embodiment, the ceramic sheet 20 may be in contact with the outer circumferential surface 10c of each of the battery cells 10. For example, the ceramic sheet 20 may be in surface contact with the entire outer circumferential surface 10c of each of the battery cells 10 in the circumferential direction of each of the battery cells 10, and the outer circumferential surface 10c of each of the battery cells 10 and the ceramic sheet 20 may be in seamless surface contact with each other.

As such, the ceramic sheet 20 may be in surface contact with the outer circumferential surface 10c of each of the battery cells 10 while surrounding (e.g., entirely surrounding) the outer circumferential surface 10c of each of the battery cells 10. As the ceramic sheet 20 is in surface contact with the outer circumferential surface 10c of each of the battery cells 10, without a space therebetween, flames may be prevented or substantially prevented from being propagated through an empty space between the ceramic sheet 20 and the outer circumferential surface 10c of each of the battery cells 10. For example, if an empty space were formed between the ceramic sheet 20 and the outer circumferential surface 10c of each of the battery cells 10, in an emergency situation such as fire or explosion of the battery cells 10, the empty space formed in the height direction of the battery cells 10 may serve as a passage of flames erupted from the battery cells 10 and facilitate propagation of the flames. Further, in an embodiment, as the ceramic sheet 20 is in surface contact with the outer circumferential surface 10c of each of the battery cells 10, thereby surrounding (e.g., entirely surrounding) the outer circumferential surface 10c of each of the battery cells 10, an electrical short circuit due to humidity or moisture generated by dew condensation, for example, may be prevented or substantially prevented. For example, as the ceramic sheet 20 surrounds the outer circumferential surface 10c of each of the battery cells 10 to prevent or substantially prevent the humidity or moisture generated by dew condensation from directly contacting the battery cells 10, the first and second electrodes 11 and 12 of the battery cells 10, having opposite polarities, may be prevented or substantially prevented from being electrically short-circuited, or the battery cells 10 neighboring each other may be prevented or substantially prevented from being electrically short-circuited.

The ceramic sheet 20 includes first and second sheets 20a and 20b which are coupled to face each other in a direction Z2 crossing the row direction Z1 with the battery cells 10 arranged in the row direction Z1 therebetween. In this state, the non-adhesive portion 25 of the ceramic sheet 20 may include the non-adhesive portions 25 of the first and second sheets 20a and 20b which are coupled to face each other with a row of the battery cells 10 therebetween, and the adhesive portion 21 of the ceramic sheet 20 may include the adhesive portions 21 of the first and second sheets 20a and 20b

In other words, the first and second sheets 20a and 20b each may include the non-adhesive portion 25 surrounding each of the battery cells 10 and the adhesive portion 21 extending across the separation gap g between the neighboring non-adhesive portions 25. As the non-adhesive portion 25 and the adhesive portion 21 that are alternately disposed are connected to each other, the first and second sheets 20a and 20b extending in the row direction Z1 may be implemented.

The non-adhesive portion 25 may correspond to a portion surrounding the outer circumferential surface 10c of each of the battery cells 10 among the first and second sheets 20a and 20b, and may insulate and protect the battery cells 10 from a surrounding environment while surrounding the outer circumferential surface 10c of each of the battery cells 10. For example, the battery cells 10 may be insulated or protected so as not to be directly affected by flames erupted from a neighboring one of the battery cells 10. In an embodiment, while surrounding (e.g., entirely surrounding) the outer circumferential surface 10c of each of the battery cells 10, the non-adhesive portion 25 may be in surface contact with the outer circumferential surface 10c of each of the battery cells 10. As the non-adhesive portion 25 is in surface contact with the outer circumferential surface 10c of each of the battery cells 10 by surrounding (e.g., entirely surrounding) the outer circumferential surface 10c of each of the battery cells 10, flames may be prevented or substantially prevented from being propagated through an empty space between the outer circumferential surface 10c of each of the battery cells 10 and the non-adhesive portion 25, or humidity or moisture due to dew condensation, for example, may be prevented or substantially prevented from being introduced to the battery cells 10 through the empty space. In an embodiment, the non-adhesive portion 25 may be formed to be round to surround the outer circumferential surface 10c of each of the battery cells 10, and may have an arc-shaped section following the outer circumferential surface 10c of each of the battery cells 10. For example, the non-adhesive portion 25 may correspond to a curved portion of the first and second sheets 20a and 20b, which corresponds to the outer circumferential surface 10c of each of the battery cells 10. In an embodiment, the non-adhesive portions 25 of the first and second sheets 20a and 20b each may surround half of the outer circumferential surface 10c of each of the battery cells 10 at respective opposite sides. For example, the non-adhesive portion 25 of the first sheet 20a may surround one half of the entire outer circumferential surface 10c of each of the battery cells 10, and the non-adhesive portion 25 of the second sheet 20b may surround the other half of the entire outer circumferential surface 10c of each of the battery cells 10.

The adhesive portion 21 may be provided between the non-adhesive portions 25 neighboring each other. For example, the adhesive portion 21 may extend across the separation gap g formed between the battery cells 10 neighboring each other, and connect the non-adhesive portions 25 neighboring each other by extending between the neighboring non-adhesive portions 25 surrounding each of the battery cells 10 across the separation gap g between the neighboring battery cells 10, thereby forming the ceramic sheet 20 extending in the row direction Z1.

The adhesive portion 21, which is a portion for coupling the first and second sheets 20a and 20b disposed to face each other with a row of the battery cells 10 therebetween, and the adhesive portions 21 of the first and second sheets 20a and 20b may be coupled to each other by being disposed to face each other. For example, an adhesive member 30 (see FIG. 4) may be provided between the adhesive portions 21 of the first and second sheets 20a and 20b. In an embodiment, the adhesive member 30 may include a double-sided tape. In an embodiment, the adhesive portions 21 of the first and second sheets 20a and 20b are in surface contact with each other with the adhesive member 30 therebetween, without crossing each other. Unlike the above, when the adhesive portions 21 of the first and second sheets 20a and 20b are coupled to each other in the separation gap g by crossing each other, the non-adhesive portion 25 connected to the adhesive portion 21 may not closely contact the outer circumferential surface 10c of each of the battery cells 10 and may be unfastened from the outer circumferential surface 10c of each of the battery cells 10. Accordingly, as an empty space may be formed between the non-adhesive portion 25 and the outer circumferential surface 10c of each of the battery cells 10, propagation of flames or intrusion of humidity or moisture due to due condensation through the empty space may occur. In an embodiment, as the adhesive portions 21 of the first and second sheets 20a and 20b coupled to face each other with a row of the battery cells 10 therebetween are in surface contact with each other with the adhesive member 30 therebetween, the non-adhesive portion 25 connected to the adhesive portion 21 may closely contact the outer circumferential surface 10c of each of the battery cells 10 without being unfastened from the outer circumferential surface 10c of each of the battery cells 10.

The adhesive portions 21 each may extend across the separation gap g between the battery cells 10 neighboring each other. In further detail, the adhesive portions 21 each may extend across the separation gap g in the row direction Z1 of the battery cells 10. In other words, the adhesive portion 21 may have a line-shaped section following a direction corresponding to the row direction Z1 of the battery cells 10. For example, the adhesive portion 21 may correspond to a non-curved portion or a flat surface portion of the first and second sheets 20a and 20b.

The ceramic sheet 20 may be formed of a material having thermal insulation and insulating characteristics so as to reduce thermal runaway and prevent or substantially prevent electrical interference between the battery cells 10 neighboring each other by surrounding the outer circumferential surface 10c of each of the battery cells 10 arranged in the row direction Z1. The ceramic sheet 20 may be formed of a ceramic material exhibiting superior thermal insulation and insulating characteristics. In an embodiment, the ceramic sheet 20 may include mica.

In an embodiment, the ceramic sheet 20 may be formed to have a height H2 that is less than a height H1 of the battery cells 10 (H2 < H1). Throughout the present specification, a height direction may refer to a height direction of the battery cells 10, and the height direction of the battery cells 10 may correspond to a direction parallel to the height direction of the ceramic sheet 20.

In an embodiment, the ceramic sheet 20 may have the height H2 that is constant along the row direction Z1. For example, the height of the non-adhesive portion 25 surrounding each of the battery cells 10 and the height of the adhesive portion 21 extending across the separation gap g between the battery cells 10 may be equal to each other. As described below, a first assembly portion 24 may be formed at positions of both ends of the ceramic sheet 20, and the height of the first assembly portion 24 may be equal to the heights of the non-adhesive portion 25 and the adhesive portion 21. In other words, the ceramic sheet 20 may have the height H2 that is generally uniform along a lengthwise direction.

In an embodiment, the height H2 of the ceramic sheet 20 is less than the height H1 of the battery cells 10, and both end portions of the battery cells 10 in the height direction of the battery cells 10, that is, the upper end portion 10a and the lower end portion 10b of each of the battery cells 10, may be exposed from the ceramic sheet 20. In this state, in connection with a relative arrangement between the battery cells 10 and the ceramic sheet 20 having different heights, the ceramic sheet 20 may surround most of the outer circumferential surface 10c of each of the battery cells 10 with respect to a central portion of the battery cells 10, while exposing the upper end portion 10a and the lower end portion 10b of each of the battery cells 10. For example, the ceramic sheet 20 may surround the battery cells 10 at a vertically central position with respect to the central portion, without being biased upward or downward in the height direction of the battery cells 10.

Referring to FIGS. 1, 7, and 8, the upper end portion 10a and the lower end portion 10b of each of the battery cells 10, which are exposed from the ceramic sheet 20, that is, the non-adhesive portion 25 of the ceramic sheet 20, may be covered by a cell holder 100. In an embodiment, the cell holder 100 may include an upper holder 110 into which the upper end portion 10a of each of the battery cells 10 is inserted and a lower holder 120 into which the lower end portion 10b of each of the battery cells 10 is inserted. In an embodiment, assembly ribs R1 and R2, into which the upper end portion 10a and the lower end portion 10b of each of the battery cells 10 are respectively inserted, may be formed in the upper holder 110 and the lower holder 120, respectively. In this state, to avoid physical interference with the assembly ribs R1 and R2 of the upper holder 110 and the lower holder 120, the upper end portion 10a and the lower end portion 10b of each of the battery cells 10, around which the assembly ribs R1 and R2 of the upper holder 110 and the lower holder 120 are respectively arranged, may be exposed from the ceramic sheet 20.

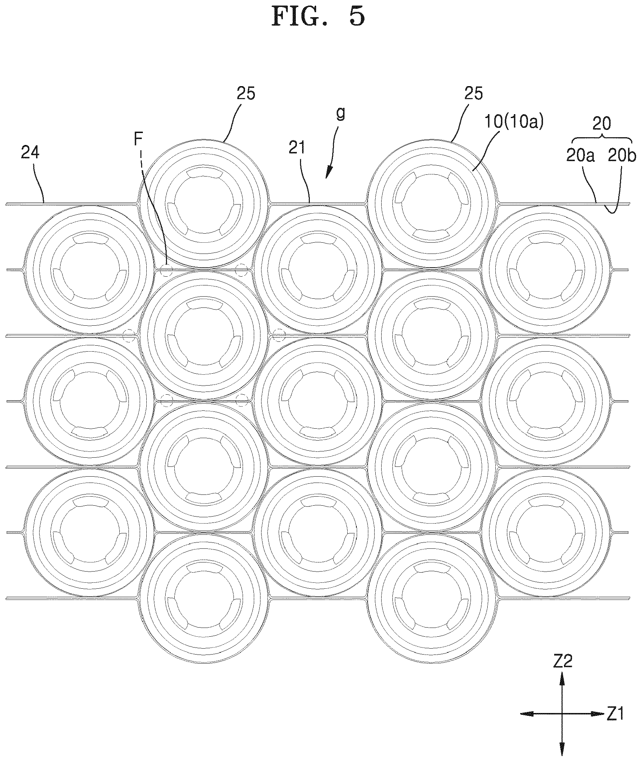

Referring to FIG. 5, the battery cells 10 may be arranged in two or more rows, each of the battery cells 10 being surrounded by the ceramic sheet 20. In this state, the battery cells 10 in the neighboring rows may be densely disposed to be arranged between the battery cells 10 in the opposite rows, and, thus, in the ceramic sheet 20 extending and surrounding a row of the battery cells 10, the battery cells 10 in the neighboring row may be disposed at the position of the adhesive portion 21 extending across the separation gap g. In other words, the separation gap g, where the battery cells 10 are not located, is provided in a row, and, as the battery cells 10 in other neighboring rows are disposed through the separation gap g where the battery cells 10 are not located, the battery cells 10 may be densely disposed and dead space may be reduced such that a battery pack that may be miniaturized may be provided.

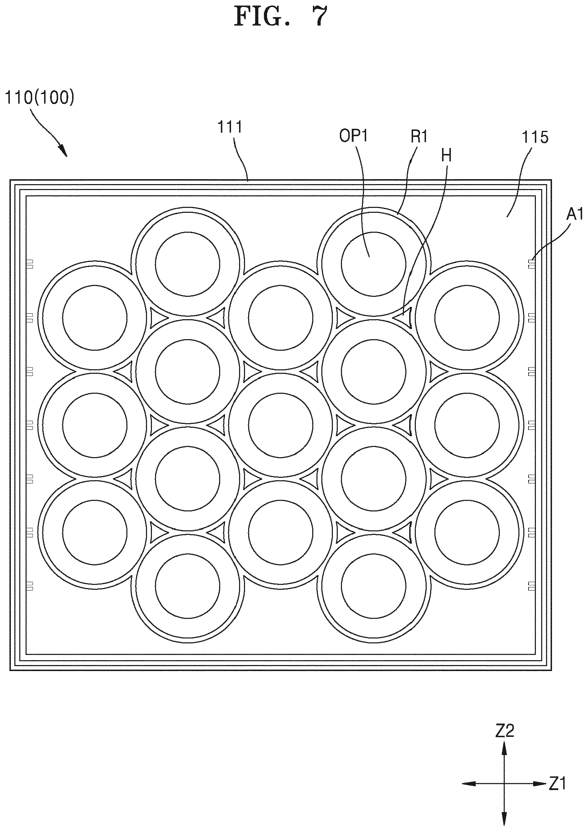

In further detail, in the ceramic sheet 20 extending and surrounding a row of the battery cells 10, the battery cells 10 in two other rows neighboring the row of the battery cells 10 may be disposed at a position of the adhesive portion 21 extending across the separation gap g with the adhesive portion 21 therebetween, to face each other in the direction Z2 crossing the row direction Z1. As such, as the battery cells 10 in the neighboring rows are densely disposed facing each other, a cooling path F may be defined between the outer circumferential surfaces 10c of three battery cells 10 neighboring one another. In an embodiment, along the outer circumferential surface 10c of one of the battery cells 10, one cooling path F may be defined for each of three neighboring battery cells 10 including the battery cell 10, and, thus, a total of six cooling paths F may be defined along the outer circumferential surface 10c of the battery cell 10. As illustrated in FIGS. 1 and 7, in the cell holder 100, that is, at least one of the upper holder 110 and the lower holder 120, for example, the upper holder 110, a cooling hole H that is fluidly connected to the cooling path F may be formed at a position corresponding to the cooling path F.

Referring to FIGS. 1 to 4, a row of the battery cells 10 having the outer circumferential surfaces 10c surrounded by the ceramic sheet 20 may be bound as one group of the battery cells 10. As such, the battery cells 10 bound as a unit of rows may be assembled by being inserted into the cell holder 100. In an embodiment, the cell holder 100 may bind, as one pack unit, a plurality of rows of the battery cells 10, each row of the battery cells 10 being bound by the ceramic sheet 20, and a plurality of rows of the battery cells 10 structurally bound by the cell holder 100 may form one battery pack. A row of the battery cells 10 being bound by the ceramic sheet 20 in units of rows may mean that, as the ceramic sheet 20 surrounds a row of the battery cells 10, the battery cells 10 in one row may be distinguished from the battery cells 10 in another row, but may not necessarily mean that a row of the battery cells 10 forms an aggregate physically and firmly bound through the ceramic sheet 20. As the ceramic sheet 20 surrounds a row of the battery cells 10 through the non-adhesive portion 25, the ceramic sheet 20 may not have a direct binding, for example, mutual adhesion, with the outer circumferential surface 10c of each of the battery cells 10. As such, a row of the battery cells 10 may not be firmly confined through a direct binding with the ceramic sheet 20.

In the following description, an assembly structure between the ceramic sheet 20 and the cell holder 100 to bind a row of the battery cells 10 is further described.

Referring to FIGS. 1 to 4, 7, and 8, the ceramic sheet 20 may include the first assembly portion 24 formed at both end positions in the row direction Z1 or the lengthwise direction of the ceramic sheet 20. In an embodiment, the first assembly portion 24 of the ceramic sheet 20 may be assembled by being inserted into second assembly portions A1 and A2 of the cell holder 100. The second assembly portions A1 and A2 of the cell holder 100 are described below in further detail. In an embodiment, the first assembly portion 24 of the ceramic sheet 20 may extend in the row direction Z1 or the lengthwise direction of the ceramic sheet 20, to be parallel to the adhesive portion 21 of the ceramic sheet 20, and may define both ends of the ceramic sheet 20 in the lengthwise direction of the ceramic sheet 20.

For example, the first assembly portion 24 of the ceramic sheet 20 may include the first assembly portions 24 of the first and second sheets 20a and 20b formed at both end positions of the first and second sheets 20a and 20b coupled to face each other with a row of the battery cells 10 therebetween. The first assembly portions 24 of the first and second sheets 20a and 20b may extend parallel to each other in the row direction Z1, and the first assembly portions 24 of the first and second sheets 20a and 20b may be coupled to face each other with the adhesive member 30 therebetween. Although the first assembly portions 24 of the first and second sheets 20a and 20b have a function similar to the function of the adhesive portion 21 because the first assembly portions 24 allow the first and second sheets 20a and 20b to be coupled to each other, while the first assembly portions 24 of the first and second sheets 20a and 20b are defined at both end positions of the first and second sheets 20a and 20b, the adhesive portions 21 of the first and second sheets 20a and 20b may be formed at a different position of the separation gap g between the battery cells 10 in the first and second sheets 20a and 20b.

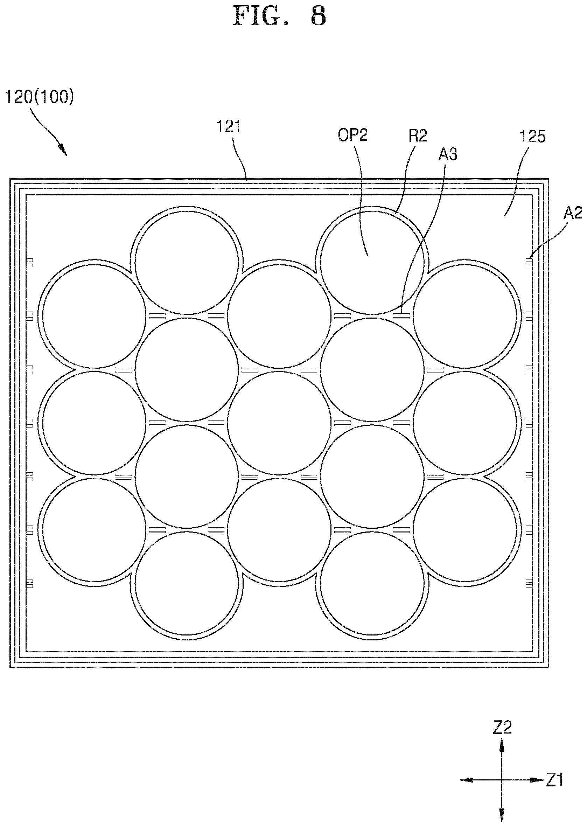

Referring to FIGS. 7 and 8, the cell holder 100 may include the second assembly portions A1 and A2 for assembling the ceramic sheet 20 that binds a row of the battery cells 10. In further detail, the second assembly portions A1 and A2 into which the first assembly portion 24 of the ceramic sheet 20 are inserted may be formed at both end portions of the cell holder 100 in the row direction Z1 or the lengthwise direction of the ceramic sheet 20. The second assembly portions A1 and A2 may provide an assembly structure for inserting the first assembly portion 24 of the ceramic sheet 20 at both end positions of the ceramic sheet 20. In an embodiment, the second assembly portions A1 and A2 each may have a slot extending in a height direction to allow the first assembly portion 24 defined at both end portions of the ceramic sheet 20 to be inserted therein. In an embodiment, the second assembly portions A1 and A2 may include a pair of guide ribs disposed to face each other.

Referring to FIGS. 1, 7, and 8, the cell holder 100 may include the upper holder 110 and the lower holder 120 that are assembled to face each other in the height direction, and the second assembly portions A1 and A2 may include the second assembly portions A1 and A2 respectively formed in the upper holder 110 and the lower holder 120. For example, the upper holder 110 and the lower holder 120 may be assembled to face each other with a plurality of rows of the battery cells 10 bound by the ceramic sheet 20 therebetween, and may be assembled to face each other with a plurality of rows of the battery cells 10 therebetween such that the first assembly portion 24 of the ceramic sheet 20 is inserted into the second assembly portions A1 and A2 respectively formed in the upper holder 110 and the lower holder 120. In this state, the second assembly portions A1 and A2 respectively formed in the upper holder 110 and the lower holder 120 may be spaced apart from each other. For example, the second assembly portions A1 and A2 of the upper holder 110 and the lower holder 120 assembled to each other may accommodate the first assembly portion 24 of the ceramic sheet 20 at different heights. In further detail, the second assembly portion A1 of the upper holder 110 may support an upper position of the first assembly portion 24 of the ceramic sheet 20, and the second assembly portion A2 of the lower holder 120 may support a lower position of the first assembly portion 24 of the ceramic sheet 20. In an embodiment, the second assembly portion A1 of the upper holder 110 may be formed at a corner position where a main body 115 and a side wall 111 of the upper holder 110 meet, and the second assembly portion A2 of the lower holder 120 may be formed at a corner position where a main body 125 and a side wall 121 of the lower holder 120 meet. In an embodiment, the main bodies 115 and 125 of the upper holder 110 and the lower holder 120 may be a plate-shaped member where the assembly ribs R1 and R2, into which the battery cells 10 are inserted, are formed.

The cell holder 100 may include the side walls 111 and 121 that extend along the edge of the main bodies 115 and 125 of the cell holder 100. The side walls 111 and 121 of the cell holder 100 may form an accommodation space for accommodating the battery cells 10, and may provide a housing to protect the battery cells 10 from an external environment by surrounding the accommodation space. For example, the assembly ribs R1 and R2, into which the upper end portion 10a and the lower end portion 10b of each of the battery cells 10 are inserted, may be arranged at inner positions of the cell holder 100 surrounded by the side walls 111 and 121 of the cell holder 100. As described above, the second assembly portions A1 and A2, into which the first assembly portion 24 of the ceramic sheet 20 are inserted, may be formed at both end portions of the cell holder 100. In an embodiment, the second assembly portions A1 and A2 may be respectively formed on the side walls 111 and 121 of the cell holder 100. In an embodiment, the second assembly portions A1 and A2 each may be formed as a pair on the side walls 111 and 121 facing each other in the row direction Z1 or the lengthwise direction of the ceramic sheet 20, and may be formed as a pair at both end positions of the cell holder 100 facing each other to accommodate the first assembly portion 24 defined at both end positions of the ceramic sheet 20. The second assembly portions A1 and A2 each may include a plurality of second assembly portions along the side walls 111 and 121 corresponding to the ceramic sheet 20 surrounding a row of the battery cells 10.

In an embodiment, the first assembly portion 24 of the ceramic sheet 20 may be inserted into the second assembly portions A1 and A2 respectively formed in the side walls 111 and 121 of the cell holder 100, and as the first assembly portion 24 of the ceramic sheet 20 is inserted into the second assembly portions A1 and A2 of the cell holder 100, the ceramic sheet 20 surrounding a row of the battery cells 10 may be guided to an assembly position.

Referring to FIG. 8, in an embodiment, the lower holder 120 may include a third assembly portion A3 formed on the main body 125 of the lower holder 120 into which the adhesive portion 21 of the ceramic sheet 20 is inserted, in addition to the second assembly portion A2 formed on the side wall 121 of the lower holder 120 into which the first assembly portion 124 of the ceramic sheet 20 is inserted. In an embodiment, the third assembly portion A3 of the lower holder 120 may define a slit into which the adhesive portion 21 of the ceramic sheet 20 is inserted. To this end, the third assembly portion A3 may include a pair of guide ribs disposed to face each other. The third assembly portion A3 may be formed between a pair of the second assembly portions A2 formed on the side wall 121 of the lower holder 120, and, in an embodiment, may be formed as a pair arranged in the row direction Z1 corresponding to each adhesive portion 21 formed for each separation gap g between the battery cells 10 neighboring each other. As the adhesive portion 21 is formed where the battery cells 10 are not located and corresponding to the separation gap g between the battery cells 10 neighboring each other, the third assembly portion A3 into which the adhesive portion 21 is inserted may be formed at a position between the assembly ribs R2 into which the battery cells 10 are inserted, and may be formed in a pair arranged in the row direction Z1 between the assembly ribs R2 neighboring each other. The second assembly portion A2 and the third assembly portion A3 may be arranged in the row direction Z1.

When the ceramic sheet 20 surrounding a row of the battery cells 10 is assembled in the lower holder 120, the first assembly portion 24 defined at both end positions of the ceramic sheet 20 may be inserted into the second assembly portion A2 of the lower holder 120, and the adhesive portion 21 formed between the first assembly portions 24 of the ceramic sheet 20 may be inserted into the third assembly portion A3 of the lower holder 120.

Although it is not illustrated, in an embodiment, similar to the third assembly portion A3 of the lower holder 120, another third assembly portion (not shown) may be formed in the upper holder 110. In this state, the third assembly portion of the upper holder 110 may be formed between the second assembly portions A1 formed on a pair of the side walls 111 of the upper holder 110 facing each other, and, in an embodiment, may include a pair of third assembly portions (not shown) arranged in the row direction Z1 at a position between the assembly ribs R1 neighboring each other, corresponding to each adhesive portion 21 formed in the ceramic sheet 20.

The cell holder 100 may include the assembly ribs R1 and R2 surrounding the upper end portion 10a and the lower end portion 10b of each of the battery cells 10 in the height direction of the battery cells 10. The cell holder 100 may include the upper holder 110 into which the upper end portion 10a of each of the battery cells 10 is inserted and the lower holder 120 into which the lower end portion 10b of each of the battery cells 10 is inserted, and the upper holder 110 and the lower holder 120 may respectively include the assembly ribs R1 and R2 into which the upper end portion 10a and the lower end portion 10b of each of the battery cells 10 are respectively inserted. For example, the assembly ribs R1 and R2 each may have a circular shape to surround the upper end portion 10a and the lower end portion 10b of each of the battery cells 10, and openings OP1 and OP2 for exposing at least parts of the upper end portion 10a and the lower end portion 10b of each of the battery cells 10 may be respectively formed at inner positions surrounded by the assembly ribs R1 and R2. In an embodiment, as the opening OP1 formed in the upper holder 110 exposes the upper end portion 10a of each of the battery cells 10, an electrical connection may be formed through the upper end portion 10a of each of the battery cells 10. As the opening OP2 formed in the lower holder 120 exposes the lower end portion 10b of each of the battery cells 10, cooling of the battery cells 10 may be performed through the lower end portion 10b of each of the battery cells 10. In an embodiment, a cooling plate 150 (see FIG. 1) may be disposed under the lower holder 120, and the battery cells 10 may be cooled through heat exchange between the lower end portion 10b of each of the battery cells 10 exposed through the opening OP2 of the lower holder 120 and the cooling plate 150. The assembly ribs R1 and R2 may surround the upper end portion 10a and the lower end portion 10b of each of the battery cells 10 exposed from the ceramic sheet 20 that surrounds the outer circumferential surface 10c of each of the battery cells 10. In other words, the assembly ribs R1 and R2 of the upper holder 110 and the lower holder 120 may surround the upper end portion 10a and the lower end portion 10b of each of the battery cells 10 exposed from the ceramic sheet 20.

In an embodiment, the cooling plate 150 (see FIG. 1) for cooling of the battery cells 10 may be disposed under the lower holder 120. The cooling plate 150 may include a metal plate exhibiting superior thermal conductivity, for example, an aluminum plate. In an embodiment, a flow path (not shown) for accommodating a flow of a coolant may be formed in the cooling plate 150.

In the following description, a battery pack according to another aspect that is not covered by the claimed invention is described.

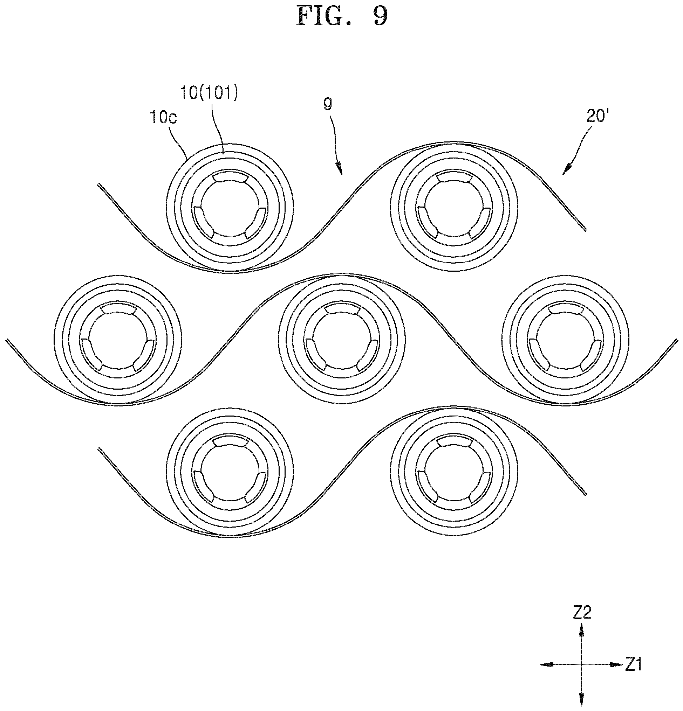

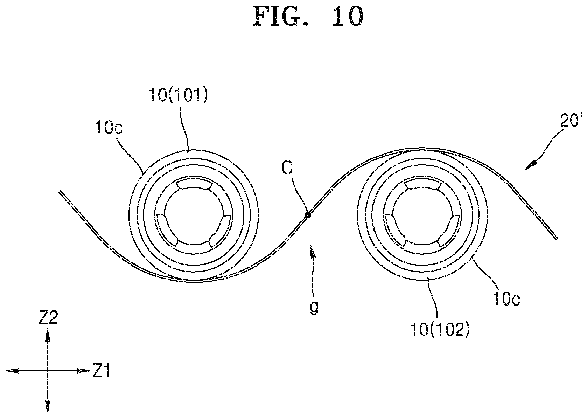

FIG. 9 is a plan view of a ceramic sheet extending and surrounding battery cells in a battery pack according to another aspect; and FIG. 10 is a plan view of a structure of the ceramic sheet illustrated in FIG. 9.

Referring to FIGS. 9 and 10, the battery pack may include the battery cells 10 including a plurality of rows of battery cells 10 disposed with the separation gap g therebetween, and a ceramic sheet 20' extending along at least any one row of the battery cells 10 in a zigzag shape through the separation gap g by surrounding the outer circumferential surfaces 10c at opposite sides of the battery cells 10 neighboring each other.
The ceramic sheet 20' may extend in the row direction Z1 by at least partially surrounding a row of the battery cells 10. For example, the ceramic sheet 20' may extend in a curved shape to surround the outer circumferential surfaces 10c of the battery cells 10 neighboring each other with the separation gap g therebetween. In an embodiment, the ceramic sheet 20' may surround the outer circumferential surfaces 10c of the battery cells 10 neighboring each other at the opposite sides with the separation gap g therebetween. For example, when first and second battery cells 101 and 102 of the battery cells 10 are arranged in the row direction Z1 neighboring each other with the separation gap g therebetween, the ceramic sheet 20' may surround one side of the outer circumferential surface 10c of the first battery cell 101, inflect or pass through the separation gap g between the first and second battery cells 101 and 102 so as to define an inflection point C, and surround the other side of the outer circumferential surface 10c of the second battery cell 102. The ceramic sheet 20' may extend through the separation gap g between the first and second battery cells 101 and 102 by surrounding each of the one side of the outer circumferential surface 10c of the first battery cell 101 and the other side of the outer circumferential surface 10c of the second battery cell 102, not surrounding the entire outer circumferential surfaces 10c of the first and second battery cells 101 and 102, inflect or pass through the separation gap g so as to define the inflection point C, and extend from the one side of the outer circumferential surface 10c of the first battery cell 101 to the other side of the outer circumferential surface 10c of the second battery cell 102. The terms "one side" and "the other side" may refer to the opposite sides in the direction Z2 crossing the row direction Z1 in which the battery cells 10 are arranged, for example, the opposites sides in a direction perpendicular to the row direction Z1.

The ceramic sheet 20' inflecting or passing through the separation gap g between the first and second battery cells 101 and 102 so as to define the inflection point C may mean that the ceramic sheet 20' surrounds the outer circumferential surfaces 10c of the first and second battery cells 101 and 102 that are opposite to each other. In other words, of the ceramic sheet 20', a portion surrounding the outer circumferential surface 10c of the first battery cell 101 and a portion surrounding the outer circumferential surface 10c of the second battery cell 102 each may have a center or a circle center at the opposite side with respect to the ceramic sheet 20.

Of the ceramic sheet 20', the portion surrounding the outer circumferential surfaces 10c of the first and second battery cells 101 and 102 may include a curved surface to surround the outer circumferential surfaces 10c of the first and second battery cells 101 and 102. In an embodiment, of the ceramic sheet 20', a portion extending from the one side of the outer circumferential surface 10c of the first battery cell 101 to the other side of the outer circumferential surface 10c of the second battery cell 102 through the separation gap g between the first and second battery cells 101 and 102 may include therein a non-curved surface or planar surface at least at the position of the inflection point C. Unlike the ceramic sheet 20 illustrated in FIG. 3, the ceramic sheet 20' illustrated in FIG. 10 may include a relatively large amount of curved surface, for example, may include a curved surface except around the inflection point C in the separation gap g.

The ceramic sheet 20' extends along a row of the battery cells 10 and surrounds (e.g., partially surrounds) the outer circumferential surface 10c of each of the battery cells 10 belonging to the row. In other words, the ceramic sheet 20' may extend in a zigzag shape across the separation gap g between the battery cells 10 neighboring each other and surround (e.g., partially surround) the outer circumferential surface 10c of each of the battery cells 10, and extend along a row of the battery cells 10 surrounding (e.g., partially surrounding) the outer circumferential surfaces 10c of all battery cells 10 belonging to the row.

The ceramic sheet 20' may surround (e.g., partially surround) the outer circumferential surfaces 10c of a row of the battery cells 10 and contact at least part of the outer circumferential surfaces 10c of a row of the battery cells 10. For example, in the first and second battery cells 101 and 102 neighboring each other with the separation gap g therebetween, the ceramic sheet 20' may contact the one side of the outer circumferential surface 10c of the first battery cell 101 and also contact the other side of the outer circumferential surface 10c of the second battery cell 102.

Unlike the embodiment illustrated in FIG. 3, in the present embodiment, the ceramic sheet 20' extending along a row of the battery cells 10 may be formed as one sheet. In other words, although the ceramic sheet 20 illustrated in FIG. 3 includes the first and second sheets 20a and 20b coupled to face each other with a row of the battery cells 10 therebetween, the ceramic sheet 20' according to the present embodiment may include a single sheet extending in a zigzag shape along a row of the battery cells 10.

In the present embodiment, as the outer circumferential surfaces 10c of a row of the battery cells 10 are surrounded (e.g., partially surrounded) by the ceramic sheet 20', the battery cells 10 may be thermally insulated and protected in an emergency situation such as fire or explosion, and humidity or moisture due to dew condensation, for example, may be prevented or substantially prevented from intruding into the battery cells 10. Also, as the ceramic sheet 20' having a simple structure including a single sheet is employed, material costs and manufacturing costs of the ceramic sheet 20' may be reduced and a manufacturing process may be simplified.

As discussed, embodiments can provide a battery pack comprising: battery cells arranged in a plurality of rows, the battery cells in a row being arranged apart from each other with a separation gap therebetween; and a ceramic sheet extending and surrounding at least any one row of the battery cells, the ceramic sheet comprising non-adhesive portions surrounding the battery cells and an adhesive portion extending across the separation gap between neighboring non-adhesive portions of the non-adhesive portions.

The ceramic sheet may surround each battery cell in the row.

The ceramic sheet may comprise first and second sheets that are coupled to face each other with the one row of the battery cells therebetween. In some embodiments, the first and second sheets and may be connected to each other at each separation gap.

Hence, the first and second sheets may be connected at each separation gap and may be separated from each other to surround each battery cell.

As discussed, embodiments can provide a a battery pack comprising: battery cells arranged in a plurality of rows, the battery cells in a row being arranged apart from each other with a separation gap therebetween; and a ceramic sheet extending along at least any one row of the plurality of rows, the ceramic sheet extending in a zigzag shape through the separation gap to at least partially surround outer circumferential surfaces of neighboring battery cells of the battery cells at opposite sides.

According to embodiments of the present disclosure, in a battery pack in which a plurality of battery cells are arranged, by employing a ceramic sheet surrounding the outer circumferential surfaces of the battery cells, the battery cells may be thermally insulated and protected in an emergency situation such as fire or explosion, propagation of flames erupted from the battery cells may be reduced, and an electrical short circuit due to humidity or moisture generated by dew condensation, for example may be prevented or substantially prevented.

It is to be understood that embodiments described herein should be considered in a descriptive sense and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the disclosure as set forth by the following claims.

## Claims

1. A battery pack comprising:
cylindrical battery cells (10) arranged in a plurality of rows, the battery cells in a row being arranged apart from each other with a separation gap therebetween; and
a ceramic sheet (20) extending and surrounding at least any one row of the battery cells, the ceramic sheet comprising non-adhesive portions (25) surrounding the battery cells, and an adhesive portion (21) extending across the separation gap between neighboring non-adhesive portions of the non-adhesive portions,
wherein the ceramic sheet further comprises first and second sheets (20a, 20b) that are coupled to face each other with the one row of the battery cells therebetween.

2. The battery pack of claim 1, wherein the non-adhesive portion comprises non-adhesive portions of the first and second sheets that respectively surround half of an outer circumferential surface (10c) of each of the battery cells at opposite sides, and
the adhesive portion comprises adhesive portions of the first and second sheets coupled to face each other.

3. The battery pack of claim 2, wherein the first and second sheets extend in a row direction (Z1) in which the battery cells are arranged, and
the non-adhesive portion and the adhesive portion are alternately arranged and connected to each other.

4. The battery pack of claim 2 or 3, wherein the adhesive portions of the first and second sheets are coupled to face each other with an adhesive member (30) therebetween.

5. The battery pack of any one of claims 2 to 4, wherein the adhesive portions of the first and second sheets are in surface contact with each other, without crossing each other.

6. The battery pack of any one of claims 1 to 5, wherein the ceramic sheet has a height (H2) less than a height (H1) of each of the battery cells, and
an upper end portion (10a) and a lower end portion (10b) of each of the battery cells are exposed from the ceramic sheet.

7. The battery pack of any one of claims 1 to 6, wherein the battery pack further comprises a cell holder (100) in which a plurality of rows of the battery cells surrounded by the ceramic sheet are arranged,
wherein the upper end portion and the lower end portion of each of the battery cells exposed from the ceramic sheet is surrounded by the cell holder.

8. The battery pack of claim 7, wherein the cell holder comprises:
an upper holder (110) in which the upper end portion of each of the battery cells is arranged; and
a lower holder (120) in which the lower end portion of each of the battery cells is arranged,
wherein the upper holder and the lower holder are arranged to face each other with the plurality of rows of the battery cells therebetween.

9. The battery pack of claim 8, wherein the upper holder and the lower holder comprise assembly ribs (R1, R2) respectively surrounding the upper end portion and the lower end portion of each of the battery cells.

10. The battery pack of any one of claims 7 to 9, wherein the cell holder further comprises a first assembly portion (24) that is arranged in the cell holder is defined at opposite end portions of the ceramic sheet to extend in a row direction (Z1) in which the battery cells are arranged.

11. The battery pack of claim 10, wherein the first assembly portion comprises first assembly portions of the first and second sheets coupled to face each other with the one row of the battery cells therebetween, and
the first assembly portions of the first and second sheets are coupled to face each other with an adhesive member therebetween.

12. The battery pack of claim 10 or 11, wherein the cell holder further comprises a second assembly portion (A1, A2) that defines a slot extending in a height direction of each of the battery cells to accommodate the first assembly portion at the opposite end portions in the row direction.

13. The battery pack of claim 12, wherein the second assembly portion comprises second assembly portions of the upper holder and the lower holder arranged to face each other with the plurality of rows of the battery cells therebetween;
optionally wherein the second assembly portions of the upper holder and the lower holder accommodate the first assembly portion together at positions apart from each other in the height direction of each of the battery cells.

14. The battery pack of claim 12 or 13, wherein the cell holder further comprises a third assembly portion (A3) that accommodates the adhesive portion of the ceramic sheet between the second assembly portions formed as a pair on side walls of the cell holder facing each other;
optionally wherein the third assembly portion is arranged as a pair in the row direction in which the battery cells are arranged between assembly ribs neighboring each other in which an upper end portion or a lower end portion of each of the battery cells is arranged.

15. The battery pack of any one of claims 1 to 14, wherein two other rows of the battery cells neighboring the one row of the battery cells are arranged to face each other with the adhesive portion therebetween, at a position of the adhesive portion in the ceramic sheet extending and surrounding the one row of the battery cells.

## Patentansprüche

1. Batteriesatz, umfassend:
zylindrische Batteriezellen (10), die in einer Vielzahl von Reihen angeordnet sind,
wobei die Batteriezellen in einer Reihe mit einem Trennungsabstand dazwischen voneinander beabstandet angeordnet sind; und
eine Keramikfolie (20), die sich zumindest über eine beliebige Reihe der Batteriezellen erstreckt und diese umgibt, wobei die Keramikfolie nichtklebende Abschnitte (25), die die Batteriezellen umgeben, und einen klebenden Abschnitt (21),
der sich über den Trennungsabstand zwischen benachbarten nichtklebenden Abschnitten der nichtklebenden Abschnitte erstreckt, umfasst,
wobei die Keramikfolie ferner eine erste und eine zweite Folie (20a, 20b) umfasst, die so gekoppelt sind, dass sie einander zugewandt sind, wobei die eine Reihe der Batteriezellen dazwischen liegt.

2. Batteriesatz nach Anspruch 1, wobei der nichtklebende Abschnitt nichtklebende Abschnitte der ersten und der zweiten Folie umfasst, die jeweils die Hälfte einer Außenumfangsfläche (1 0c) jeder der Batteriezellen an gegenüberliegenden Seiten umgeben, und
der klebende Abschnitt klebende Abschnitte der ersten und der zweiten Folie umfasst, die so gekoppelt sind, dass sie einander zugewandt sind.

3. Batteriesatz nach Anspruch 2, wobei sich die erste und die zweite Folie in einer Reihenrichtung (Z1) erstrecken, in der die Batteriezellen angeordnet sind, und der nichtklebende Abschnitt und der klebende Abschnitt abwechselnd angeordnet und miteinander verbunden sind.

4. Batteriesatz nach Anspruch 2 oder 3, wobei die klebenden Abschnitte der ersten und der zweiten Folie so gekoppelt sind, dass sie einander zugewandt sind, wobei ein Klebeelement (30) dazwischen liegt.

5. Batteriesatz nach einem der Ansprüche 2 bis 4, wobei die klebenden Abschnitte der ersten und der zweiten Folie in Oberflächenkontakt miteinander stehen, ohne sich zu kreuzen.

6. Batteriesatz nach einem der Ansprüche 1 bis 5, wobei die Keramikfolie eine Höhe (H2) aufweist, die niedriger ist als die Höhe (H1) jeder der Batteriezellen, und ein oberer Endabschnitt (10a) und ein unterer Endabschnitt (10b) jeder der Batteriezellen von der Keramikfolie freigelegt sind.

7. Batteriesatz nach einem der Ansprüche 1 bis 6, wobei der Batteriesatz ferner einen Zellenhalter (100) umfasst, in dem eine Vielzahl von Reihen der Batteriezellen, die von der Keramikfolie umgeben sind, angeordnet sind,
wobei der obere Endabschnitt und der untere Endabschnitt jeder der Batteriezellen, die von der Keramikfolie freigelegt sind, von dem Zellenhalter umgeben sind.

8. Batteriesatz nach Anspruch 7, wobei der Zellenhalter umfasst:
einen oberen Halter (110), in dem der obere Endabschnitt jeder der Batteriezellen angeordnet ist; und
einen unteren Halter (120), in dem der untere Endabschnitt jeder der Batteriezellen angeordnet ist,
wobei der obere Halter und der untere Halter so angeordnet sind, dass sie einander zugewandt sind, wobei die Vielzahl der Reihen der Batteriezellen dazwischen liegt.

9. Batteriesatz nach Anspruch 8, wobei der obere Halter und der untere Halter Zusammenbaurippen (R1, R2) umfassen, die entsprechend den oberen Endabschnitt und den unteren Endabschnitt jeder der Batteriezellen umgeben.

10. Batteriesatz nach einem der Ansprüche 7 bis 9, wobei der Zellenhalter ferner einen ersten Zusammenbauabschnitt (24) umfasst, der in dem Zellenhalter angeordnet ist und an gegenüberliegenden Endabschnitten der Keramikfolie definiert ist, um sich in eine Reihenrichtung (Z1) zu erstrecken, in der die Batteriezellen angeordnet sind.

11. Batteriesatz nach Anspruch 10, wobei der erste Zusammenbauabschnitt erste Zusammenbauabschnitte der ersten und der zweiten Folie umfasst, die so gekoppelt sind, dass sie einander zugewandt sind, wobei die eine Reihe der Batteriezellen dazwischen liegt, und
die ersten Zusammenbauabschnitte der ersten und der zweiten Folie so gekoppelt sind, dass sie einander zugewandt sind, wobei ein Klebeelement dazwischen liegt.

12. Batteriesatz nach Anspruch 10 oder 11, wobei der Zellenhalter ferner einen zweiten Zusammenbauabschnitt (A1, A2) umfasst, der einen Schlitz definiert, der sich in einer Höhenrichtung jeder der Batteriezellen erstreckt, um den ersten Zusammenbauabschnitt an den gegenüberliegenden Endabschnitten in der Reihenrichtung aufzunehmen.

13. Batteriesatz nach Anspruch 12, wobei der zweite Zusammenbauabschnitt zweite Zusammenbauabschnitte des oberen Halters und des unteren Halters umfasst, die so angeordnet sind, dass sie einander zugewandt sind, wobei die Vielzahl der Reihen der Batteriezellen dazwischen liegt;
wobei optional die zweiten Zusammenbauabschnitte des oberen Halters und des unteren Halters den ersten Zusammenbauabschnitt zusammen an Positionen aufnehmen, die in der Höhenrichtung jeder der Batteriezellen voneinander beabstandet sind.

14. Batteriesatz nach Anspruch 12 oder 13, wobei der Zellenhalter ferner einen dritten Zusammenbauabschnitt (A3) umfasst, der den klebenden Abschnitt der Keramikfolie zwischen den zweiten Zusammenbauabschnitten aufnimmt, die als Paar an einander zugewandten Seitenwänden des Zellenhalters ausgebildet sind;
wobei optional der dritte Zusammenbauabschnitt als Paar in der Reihenrichtung angeordnet ist, in der die Batteriezellen zwischen einander benachbarten Zusammenbaurippen angeordnet sind, in denen ein oberer Endabschnitt oder ein unterer Endabschnitt von jeder der Batteriezellen angeordnet ist.

15. Batteriesatz nach einem der Ansprüche 1 bis 14, wobei zwei andere Reihen von Batteriezellen, die der einen Reihe von Batteriezellen benachbart sind, so angeordnet sind, dass sie einander zugewandt sind, wobei der klebende Abschnitt dazwischen liegt, und zwar an einer Position des klebenden Abschnitts in der Keramikfolie, die sich über die eine Reihe von Batteriezellen erstreckt und diese umgibt.

## Revendications

1. Bloc-batterie comprenant :
des cellules de batterie cylindriques (10) agencées dans une pluralité de rangées, les cellules de batterie dans une rangée étant agencées à l'écart les unes des autres avec un espace de séparation entre celles-ci ; et
une feuille céramique (20) s'étendant et entourant au moins l'une quelconque des cellules de batterie, la feuille céramique comprenant des parties non adhésives (25) entourant les cellules de batterie, et une partie adhésive (21) s'étendant à travers l'espace de séparation entre des parties non adhésives voisines des parties non adhésives,
dans lequel la feuille céramique comprend en outre de première et deuxième feuilles (20a, 20b) qui sont couplées de manière à se faire face avec la rangée des cellules de batterie entre celles-ci.

2. Bloc-batterie selon la revendication 1, dans lequel la partie non adhésive comprend des parties non adhésives des première et deuxième feuilles qui entourent respectivement la moitié d'une surface circonférentielle externe (10c) de chacune des cellules de batterie à des côtés opposés, et
la partie adhésive comprend des parties adhésives des première et deuxième feuilles couplées de manière à se faire face.

3. Bloc-batterie selon la revendication 2, dans lequel les première et deuxième feuilles s'étendent dans une direction de rangée (Z1) dans laquelle les cellules de batterie sont agencées, et
la partie non adhésive et la partie adhésive sont agencées en alternance et reliées l'une à l'autre.

4. Bloc-batterie selon la revendication 2 ou 3, dans lequel les parties adhésives des première et deuxième feuilles sont couplées de manière à se faire face avec un élément adhésif (30) entre celles-ci.

5. Bloc-batterie selon l'une quelconque des revendications 2 à 4, dans lequel les parties adhésives des première et deuxième feuilles sont en contact de surface l'une avec l'autre, sans se croiser.

6. Bloc-batterie selon l'une quelconque des revendications 1 à 5, dans lequel la feuille céramique a une hauteur (H2) inférieure à une hauteur (H1) de chacune des cellules de batterie, et
une partie d'extrémité supérieure (10a) et une partie d'extrémité inférieure (10b) de chacune des cellules de batterie sont exposées à partir de la feuille céramique.

7. Bloc-batterie selon l'une quelconque des revendications 1 à 6, dans lequel le bloc-batterie comprend en outre un support de cellule (100) dans lequel une pluralité de rangées des cellules de batterie entourées par la feuille céramique sont agencées,
dans lequel la partie d'extrémité supérieure et la partie d'extrémité inférieure de chacune des cellules de batterie exposées à partir de la feuille céramique est entourée par le support de cellule.

8. Bloc-batterie selon la revendication 7, dans lequel le support de cellule comprend :
un support supérieur (110) dans lequel la partie d'extrémité supérieure de chacune des cellules de batterie est agencée ; et
un support inférieur (120) dans lequel la partie d'extrémité inférieure de chacune des cellules de batterie est agencée ; et
le support supérieur et le support inférieur sont agencés de manière à se faire face avec la pluralité de rangées des cellules de batterie entre ceux-ci.

9. Bloc-batterie selon la revendication 8, dans lequel le support supérieur et le support inférieur comprennent des nervures d'assemblage (R1, R2) entourant respectivement la partie d'extrémité supérieure et la partie d'extrémité inférieure de chacune des cellules de batterie.

10. Bloc-batterie selon l'une quelconque des revendications 7 à 9, dans lequel le support de cellule comprend en outre une première partie d'assemblage (24) qui est agencée dans le support de cellule est définie au niveau de parties d'extrémité opposées de la feuille céramique pour s'étendre dans une direction de rangée (Z1) dans laquelle les cellules de batterie sont agencées.

11. Bloc-batterie selon la revendication 10, dans lequel la première partie d'assemblage comprend de premières parties d'assemblage des première et deuxième feuilles couplées de manière à se faire face avec la rangée des cellules de batterie entre celles-ci, et
les premières parties d'assemblage des première et deuxième feuilles sont couplées de manière à se faire face avec un élément adhésif entre celles-ci.

12. Bloc-batterie selon la revendication 10 ou 11, dans lequel le support de cellule comprend en outre une deuxième partie d'assemblage (A1, A2) qui définit une fente s'étendant dans le sens de la hauteur de chacune des cellules de batterie pour loger la première partie d'assemblage au niveau des parties d'extrémité opposées dans la direction de rangée.

13. Bloc-batterie selon la revendication 12, dans lequel la deuxième partie d'assemblage comprend de deuxièmes parties d'assemblage du support supérieur et du support inférieur agencées de manière à se faire face avec la pluralité de rangées des cellules de batterie entre celles-ci ;
éventuellement dans lequel les deuxièmes parties d'assemblage du support supérieur et du support inférieur logent la première partie d'assemblage ensemble à des positions espacées les unes des autres dans le sens de la hauteur de chacune des cellules de batterie.

14. Bloc-batterie selon la revendication 12 ou 13, dans lequel le support de cellule comprend en outre une troisième partie d'assemblage (A3) qui loge la partie adhésive de la feuille céramique entre les deuxièmes parties d'assemblage se présentant sous la forme d'une paire sur des parois latérales du support de cellule se faisant face ;
éventuellement dans lequel la troisième partie d'assemblage est agencée sous la forme d'une paire dans la direction de rangée dans laquelle les cellules de batterie sont agencées entre des nervures d'assemblage voisines dans lesquelles une partie d'extrémité supérieure ou une partie d'extrémité inférieure de chacune des cellules de batterie est agencée.

15. Bloc-batterie selon l'une quelconque des revendications 1 à 14, dans lequel deux autres rangées des cellules de batterie voisines de la rangée des cellules de batterie sont agencées de manière à se faire face avec la partie adhésive entre celles-ci, à une position de la partie adhésive dans la feuille céramique s'étendant et entourant la rangée des cellules de batterie.
